# EUROPEAN PATENT APPLICATION

(11) **EP 4 707 548 A1**
(43) Date of publication of application: **11.03.2026**
(21) Application number: 25200005.4
(22) Date of filing: 03.09.2025
(51) Int. Cl.: F01D 17/04, F01D 21/00, F01D 21/14, F01D 25/24, F02C 7/36, F16B 35/00, G01L 5/00

(54) **FORCE SENSING BOLT FOR A TORQUE MEASUREMENT SYSTEM ON A GEARBOX OF A GAS TURBINE ENGINE**

(30) Priority: 04.09.2024 US 202418824164
(71) Applicant: PRATT & WHITNEY CANADA CORP., Longueuil, Québec J4G 1A1 (CA)
(72) Inventor: REMY, Patrice, (01BE5) Longueuil, J4G 1A1 (CA); BRITO, Roberto, (01BE5) Longueuil, J4G 1A1 (CA)
(74) Representative: Dehns

(57) **Abstract**

A turboshaft engine transmission (201) with a torque measurement system (202) is provided. The turboshaft engine transmission (201) includes a front housing (210), a rear housing (220), a mating flange (230) axially interposed between the front and rear housings (210, 220), the mating flange (230) defining a sensing bolt hole (240), assembly bolts (260) disposed to assemble the front and rear housings (210, 220) to the mating flange (230) with a preload sufficient to maintain assembly during engine operational conditions and a sensing bolt (250) installed in the sensing bolt hole (240) to measure forces exerted on the mating flange (230) by the front and rear housings (210, 220).

## Description

### BACKGROUND

The present disclosure relates to gas turbine engines and, in particular, to a force sensing bolt for a torque measurement system on a gearbox of a gas turbine engine.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a rotor. The rotor rotation drives a compressor to compress the air for the combustor and, as noted above, can be used to drive operations of a generator to produce electricity and/or for propulsion.

### SUMMARY

According to an aspect of the disclosure, a turboshaft engine transmission with a torque measurement system is provided. The turboshaft engine transmission includes a front housing, a rear housing, a mating flange axially interposed between the front and rear housings, the mating flange defining a sensing bolt hole, assembly bolts disposed to assemble the front and rear housings to the mating flange with a preload sufficient to maintain assembly during engine operational conditions and a sensing bolt installed in the sensing bolt hole to measure forces exerted on the mating flange by the front and rear housings.

In a further embodiment of the previous embodiment, an epicyclic geartrain is housed within the front and rear housings, the epicyclic geartrain including first and second ring gears, which, during engine operations, experience axial forces acting along a main engine axis that is proportional to applied torque, which is applied evenly to the first and second ring gears. The axial forces of the first and second ring gears react in opposite directions on the front and rear housings, respectively.

In a further embodiment of any of the previous embodiments, the assembly bolts are arranged in a circular pattern defined about an engine axis.

In a further embodiment of any of the previous embodiments, the sensing bolt includes a strain gauge with a set preload range corresponding to the preload of the assembly bolts.

In a further embodiment of any of the previous embodiments, the assembly bolts are arranged in a circular pattern defined about a main engine axis.

In a further embodiment of any of the previous embodiments, the mating flange defines multiple sensing bolt holes interleaved with the assembly bolts in the circular pattern defined about the main engine axis and the sensing bolt is provided as multiple sensing bolts which are respectively installed in corresponding ones of the multiple sensing bolt holes.

In a further embodiment of any of the previous embodiments, each of the multiple sensing bolts includes a strain gauge with a set preload range corresponding to the preload of the assembly bolts.

In a further embodiment of any of the previous embodiments, the turboshaft engine transmission further includes a sealing element disposed around each of the multiple sensing bolts in each corresponding one of the multiple sensing bolt holes.

According to an aspect of the disclosure, a turboshaft engine transmission system with a torque measurement system is provided. The turboshaft engine transmission system includes a front housing, a rear housing, a mating flange axially interposed between the front and rear housings, the mating flange defining a sensing bolt hole, assembly bolts disposed to assemble the front and rear housings to the mating flange with a preload sufficient to maintain assembly during engine operational conditions, a sensing bolt and an engine controller. The sensing bolt is installed in the sensing bolt hole to measure forces exerted on the mating flange by the front and rear housings and to generate a signal reflective of the forces. The engine controller is coupled to the sensing bolt and configured to calculate engine output torque from the signal.

In a further embodiment of any of the previous embodiments, an epicyclic geartrain is housed within the front and rear housings.

In a further embodiment of any of the previous embodiments, the epicyclic geartrain includes first and second ring gears, which, during engine operations, experience axial forces acting along a main engine axis that is proportional to applied torque, which is applied evenly to the first and second ring gears, and the axial forces of the first and second ring gears react in opposite directions on the front and rear housings, respectively.

In a further embodiment of any of the previous embodiments, the assembly bolts are arranged in a circular pattern defined about an engine axis.

In a further embodiment of any of the previous embodiments, the sensing bolt includes a strain gauge with a set preload range corresponding to the preload of the assembly bolts.

In a further embodiment of any of the previous embodiments, the assembly bolts are arranged in a circular pattern defined about a main engine axis.

In a further embodiment of any of the previous embodiments, the mating flange defines multiple sensing bolt holes interleaved with the assembly bolts in the circular pattern defined about the main engine axis and the sensing bolt is provided as multiple sensing bolts which are respectively installed in corresponding ones of the multiple sensing bolt holes and which generate respective signals reflective of the forces.

In a further embodiment of any of the previous embodiments, the engine controller is coupled to each of the multiple sensing bolts and configured to calculate engine output torque from each of the respective signals.

In a further embodiment of any of the previous embodiments, each of the multiple sensing bolts includes a strain gauge with a set preload range corresponding to the preload of the assembly bolts.

In a further embodiment of any of the previous embodiments, the engine controller is configured to calculate a b-moment from differences in each of the respective signals.

In a further embodiment of any of the previous embodiments, the turboshaft engine transmission further includes a sealing element disposed around each of the multiple sensing bolts in each corresponding one of the multiple sensing bolt holes.

According to an aspect of the disclosure, a method of calculating engine output torque in a turboshaft engine transmission system with a torque measurement system is provided. The method includes assembling front and rear housings to a mating flange with a preload sufficient to maintain assembly during operational conditions, installing sensing bolts in sensing bolt holes of the mating flange to measure forces exerted on the mating flange by the front and rear housings and to generate signals reflective of the forces, calibrating the sensing bolts and calculating, in an engine controller coupled to the sensing bolts following the calibrating, the engine output torque from the signals.

In a further embodiment of any of the previous embodiments, the installing includes sealing the sensing bolts in the sensing holes.

In a further embodiment of any of the previous embodiments, the method further includes calculating, in the engine controller, a b-moment from differences between the signals.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2 is a side view of a turboshaft engine transmission system provided with a torque measurement system in accordance with embodiments;
FIG. 3 is an axial view of the turboshaft engine transmission system provided with the torque measurement system of FIG. 2 in accordance with embodiments;
FIG. 4 is a side view of a force sensing bolt with a sealing element in accordance with embodiments; and
FIG. 5 is a flow diagram illustrating a method of calculating engine output torque in a turboshaft engine transmission system with a torque measurement system in accordance with embodiments.

### DETAILED DESCRIPTION

The following disclosure is applicable to any type of gas turbine engine, including, but not limited to, turbofans, turboshafts, turboprops, turbojets, etc. The gas turbine engine described below is provided by way of example, and should not be interpreted as limiting the scope of the application or the claims in any way.

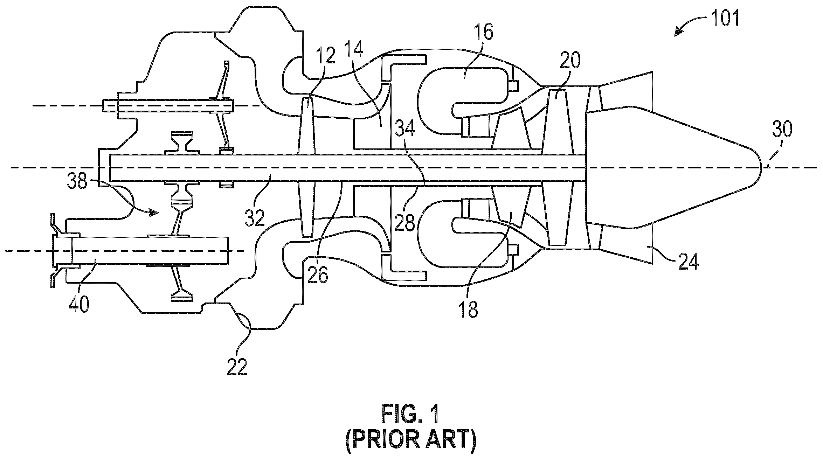

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

Typically, a torque measurement system serves several functions on a gas turbine engine, such as the turboshaft engine 101 of FIG. 1. The torque measurement system can be part of an engine control and power management system and can provide for indication of engine power output, regulation of fuel flows, prevention of the engine from exceeding a maximum torque limit, protection of the gearbox from damage, etc. The torque measurement system can also be used to estimate thrust output in a turboprop engine for example, to match power output between engines in a twin engine helicopter for example, to anticipate power needs during rapid maneuvers, to prevent compressor stall, etc. The torque measurement system may also be required for thrust control, for an auto-throttle system on turbofans, for managing fan/core speed on geared turbofan, etc.

In current methods to measure torque for aviation gas engine turbines, a torque shaft is used in combination with a phase shift sensor or with a hydraulic oil piston depending on a required resolution for the control system. In general, these systems require a set of hardware, torque shaft/sensor or piston/oil cavities and sensors with each configuration tending to impact an axial length of the gearbox and the engine as a whole and to add weight to the engine. As an alternative, torque measurement systems involving strain gauges have been used for engine development and testing. They involve measuring the twist of a shaft in the gearbox with a slip ring or measuring the strain between a rotating gear and a fixed casing. These methods often cannot be use for a production configuration, however, due to set-up complexity.

A need therefore exists for a torque measuring system that has an increased accuracy as compared with conventional solutions.

Thus, as will be described below, a torque measurement system is provided that will allow for removal of torque sensor probe-torque shaft arrangements or torque piston arrangements from existing turboshaft gas turbine engines, providing benefits of reduced cost and weight, improved maintainability and improved accuracy. A typical reduction gearbox is disposed within a front and a rear housing assembly connected together by a spigot fit and mating flange with a circular bolt pattern. The bolts are tightened to induce a preload that ensures that the mating flange remains intact throughout operational conditions. In cases of an epicyclical geartrain during the operational conditions, a ring gear or ring gears experience axial forces proportional to applied torque. These axial forces tend to act axially along the engine main axis and react in opposite directions on the front and rear housings, effectively trying to pull them apart. Therefore, in one configuration, holes are added around the mating flanges between the bolts of the current bolt pattern and strain sensing devices are installed in those holes. The strain sensing devices can be force/tensile sensing bolts or any type of strain gauges with a set preload range to have sufficient precision to measure strain variation (i.e., preload, axial load, tensile load, etc.). Strain signals will then be generated for use by engine control systems to calculate engine output torque. Alternatively, ducting could be designed with integrated sensor mounting provisions, such as a composite inlet duct with an embedded adaptor boss to mount sensors. Thin film pressure sensors could then be introduced between the mating flanges of the front and rear housings.

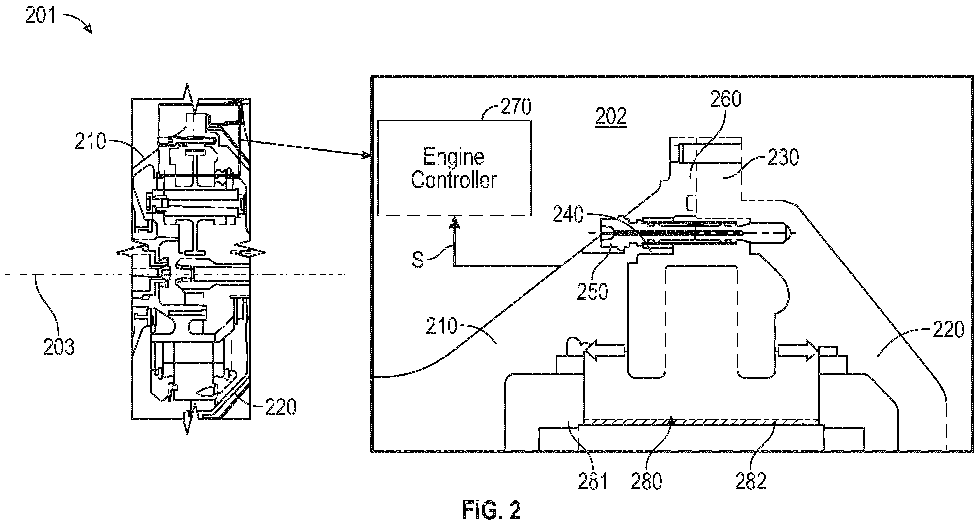

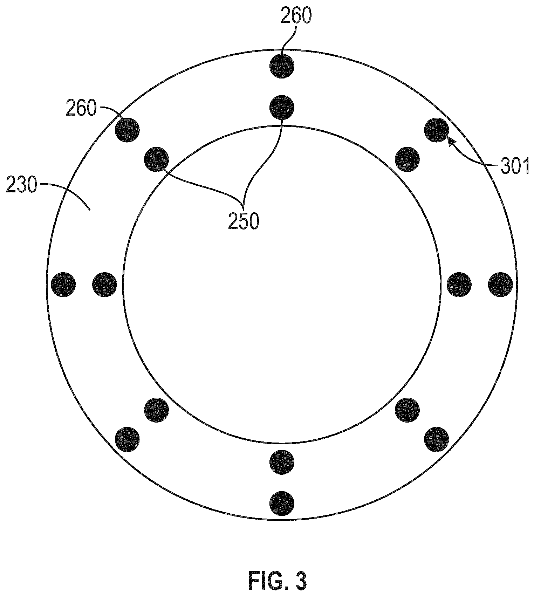

With reference to FIGS. 2 and 3, a turboshaft engine transmission system 201 is provided with a torque measurement system 202 and is similar in some respects to the turboshaft engine 101 of FIG. 1. The turboshaft engine transmission system 201 includes a front housing 210, a rear housing 220 and a mating flange 230. The mating flange 230 is axially interposed between the front and rear housings 210 and 220 and defines one or more sensing bolt holes 240 and one or more sensing bolts 250. The following description will relate to the embodiments in which the mating flange 230 defines multiple sensing bolt holes 240 and the one or more sensing bolts 250 are provided as multiple sensing bolts 250. This is done for purposes of clarity and brevity and is not intended to otherwise limit the disclosure or the following claims in any way.

The turboshaft engine transmission system 201 further includes assembly bolts 260 and an engine controller 270. The assembly bolts 260 can be arranged in a circular or annular pattern 301 (see FIG. 3) that is defined about a main engine axis 203 (see FIG. 2) and are disposed to assemble the front and rear housings 210 and 220 to the mating flange 230 with a preload that is sufficient to maintain assembly during engine operational conditions. The multiple sensing bolt holes 240 are respectively interleaved with the assembly bolts 260 in the circular or annular pattern defined about the main engine axis 203. The multiple sensing bolts 250 are respectively installed in corresponding ones of the multiple sensing bolt holes 240. Each of the multiple sensing bolts 250 is configured to measure forces exerted on the mating flange 230 by the front and rear housings 210 and 220 and to generate a respective signal S that is reflective of the forces. In an exemplary case, each of the multiple sensing bolts 250 can include or be provided as a force/tensile sensing bolt, such as a strain gauge, with a set preload range corresponding to the preload of the assembly bolts 260 to have sufficient precision to measure strain variation (i.e., preload, axial load, tensile load, etc.). The engine controller 270 is coupled to each of the multiple sensing bolts 250 and is configured to calculate engine output torque from each of the respective signals S. The engine controller 270 can also be further configured to calculate a b-moment (i.e., from a propeller) from differences in each of the respective signals S.

In accordance with embodiments and as shown in FIG. 2, the turboshaft engine transmission system 201 further includes an epicyclic geartrain 280 that is housed within the front and rear housings 210 and 220. The epicyclic geartrain 280 includes first and second ring gears 281 and 282. During engine operations, the first and second ring gears 281 and 282 experience axial forces acting along the main engine axis 203 that is proportional to applied torque, which is applied evenly to the first and second ring gears 281 and 282. The axial forces of the first and second ring gears 281 and 282 react in opposite directions on the front and rear housings 210 and 220, respectively.

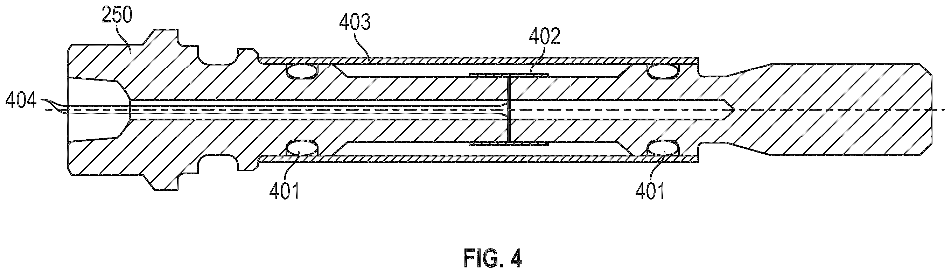

With continued reference to FIG. 2 and with additional reference to FIG. 4, in accordance with embodiments, the turboshaft engine transmission system 201 can further includes a sealing element 401 disposed around each of the multiple sensing bolts 250 in each corresponding one of the multiple sensing bolt holes 240 (see FIG. 2). In addition, as shown in FIG. 4, each of the multiple sensing bolts 250 can include force sensors 402, force sensor protection sleeves 403 and wires 404 by which the force sensors 402 are connectable with the engine controller 270.

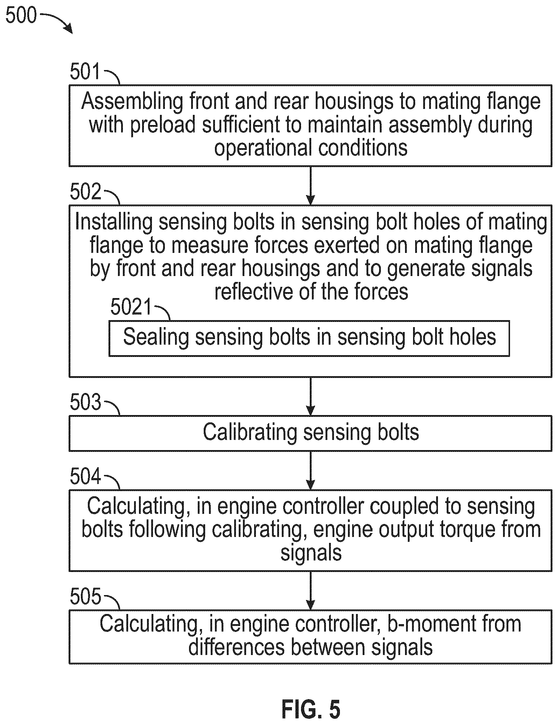

With reference to FIG. 5, a method 500 of calculating engine output torque in a turboshaft engine transmission system with a torque measurement system, such as the turboshaft engine transmission system 201 and the torque measurement system 202 of FIGS. 2 and 3, is provided. As shown in FIG. 5, the method 500 includes assembling front and rear housings to a mating flange with a preload sufficient to maintain assembly during operational conditions (block 501), installing sensing bolts in sensing bolt holes of the mating flange to measure forces exerted on the mating flange by the front and rear housings and to generate signals reflective of the forces (block 502), calibrating the sensing bolts (block 503) and calculating, in an engine controller coupled to the sensing bolts following the calibrating, the engine output torque from the signals (block 504). In accordance with embodiments, the installing of block 502 can include sealing the sensing bolts in the sensing holes (block 5021) and the method 500 can further include calculating, in the engine controller, a b-moment from differences between the signals (block 505).

Technical effects and benefits of the present disclosure are the provision of a torque measurement system that will allow for removal of torque sensor probe-torque shaft arrangements or torque piston arrangements from existing turboshaft gas turbine engines, providing benefits of reduced cost and weight, improved maintainability and improved accuracy.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A turboshaft engine transmission (201) with a torque measurement system (202), the turboshaft engine transmission (201) comprising:
a front housing (210);
a rear housing (220);
a mating flange (230) axially interposed between the front and rear housings (210, 220), the mating flange (230) defining a sensing bolt hole (240);
assembly bolts (260) disposed to assemble the front and rear housings (210, 220) to the mating flange (230) with a preload sufficient to maintain assembly during engine operational conditions; and
a sensing bolt (250) installed in the sensing bolt hole (240) to measure forces exerted on the mating flange (230) by the front and rear housings (210, 220).

2. The turboshaft engine transmission (201) according to claim 1, further comprising an epicyclic geartrain (280) housed within the front and rear housings (210, 220),
wherein:
the epicyclic geartrain (280) comprises first and second ring gears (281, 282), which, during engine operations, experience axial forces acting along a main engine axis (203) that is proportional to applied torque, which is applied evenly to the first and second ring gears (281, 282), and
the axial forces of the first and second ring gears (281, 282) react in opposite directions on the front and rear housings (210, 220), respectively.

3. The turboshaft engine transmission (201) according to claim 1 or 2, wherein the assembly bolts (260) are arranged in a circular pattern defined about an engine axis (203).

4. The turboshaft engine transmission (201) according to claim 1, 2 or 3, wherein the sensing bolt (250) comprises a strain gauge with a set preload range corresponding to the preload of the assembly bolts (260).

5. The turboshaft engine transmission (201) according to any preceding claim, wherein:
the assembly bolts (260) are arranged in a circular pattern defined about a main engine axis (203),
the mating flange (230) defines multiple sensing bolt holes (240) interleaved with the assembly bolts (260) in the circular pattern defined about the main engine axis (203), and
the sensing bolt (250) is provided as multiple sensing bolts (250) which are respectively installed in corresponding ones of the multiple sensing bolt holes (240).

6. The turboshaft engine transmission (201) according to claim 5, wherein each of the multiple sensing bolts (250) comprises a strain gauge with a set preload range corresponding to the preload of the assembly bolts (260).

7. The turboshaft engine transmission (201) according to claim 5 or 6, further comprising a sealing element (401) disposed around each of the multiple sensing bolts (250) in each corresponding one of the multiple sensing bolt holes (240).

8. A turboshaft engine transmission system (201) comprising the turboshaft engine transmission of claim 1, wherein:
the sensing bolt (250) is installed in the sensing bolt hole (240) to generate a signal reflective of the forces; and
the turboshaft engine transmission system (201) further comprises an engine controller (270) coupled to the sensing bolt (250) and configured to calculate engine output torque from the signal.

9. The turboshaft engine transmission system (201) according to claim 8, further comprising an epicyclic geartrain (280) housed within the front and rear housings (210, 220),
wherein, optionally:
the epicyclic geartrain (280) comprises first and second ring gears (281, 282), which, during engine operations, experience axial forces acting along a main engine axis (203) that is proportional to applied torque, which is applied evenly to the first and second ring gears (281, 282), and
the axial forces of the first and second ring gears (281, 282) react in opposite directions on the front and rear housings (210, 220), respectively.

10. The turboshaft engine transmission system (201) according to claim 8 or 9, wherein:
the assembly bolts (260) are arranged in a circular pattern defined about an engine axis (203); and/or
the sensing bolt (250) comprises a strain gauge with a set preload range corresponding to the preload of the assembly bolts (260).

11. The turboshaft engine transmission system (201) according to claim 8, 9 or 10, wherein:
the assembly bolts (260) are arranged in a circular pattern defined about a main engine axis (203),
the mating flange (230) defines multiple sensing bolt holes (240) interleaved with the assembly bolts (260) in the circular pattern defined about the main engine axis (203), and
the sensing bolt (250) is provided as multiple sensing bolts (250) which are respectively installed in corresponding ones of the multiple sensing bolt holes (240) and which generate respective signals reflective of the forces,
wherein, optionally:
each of the multiple sensing bolts (250) comprises a strain gauge with a set preload range corresponding to the preload of the assembly bolts (260); and/or
the system (201) further comprises a sealing element (401) disposed around each of the multiple sensing bolts (250) in each corresponding one of the multiple sensing bolt holes (240).

12. The turboshaft engine transmission system (201) according to claim 11, wherein the engine controller (270) is coupled to each of the multiple sensing bolts (250) and configured to calculate engine output torque from each of the respective signals.

13. The turboshaft engine transmission system (201) according to claim 12, wherein the engine controller (270) is configured to calculate a b-moment from differences in each of the respective signals.

14. A method of calculating engine output torque in a turboshaft engine transmission system (201) with a torque measurement system (202), the method comprising:
assembling front and rear housings (210, 220) to a mating flange (230) with a preload sufficient to maintain assembly during operational conditions;
installing sensing bolts (250) in sensing bolt holes (240) of the mating flange (230) to measure forces exerted on the mating flange (230) by the front and rear housings (210, 220) and to generate signals reflective of the forces;
calibrating the sensing bolts (250); and
calculating, in an engine controller (270) coupled to the sensing bolts (250) following the calibrating, the engine output torque from the signals.

15. The method according to claim 14, wherein:
the installing comprises sealing the sensing bolts (250) in the sensing holes (240); and/or
the method further comprises calculating, in the engine controller (270), a b-moment from differences between the signals.
